# EUROPEAN PATENT APPLICATION

(11) **EP 4 787 184 A1**
(43) Date of publication of application: **05.08.2026**
(21) Application number: 24879040.4
(22) Date of filing: 16.10.2024
(51) Int. Cl.: G06F 16/332

(54) **SEARCH METHOD AND APPARATUS**

(30) Priority: 20.10.2023 CN 202311375027
(71) Applicant: HUAWEI TECHNOLOGIES CO., LTD., Shenzhen 518129 (CN)
(72) Inventor: HOU, Shengluan, Shenzhen, Guangdong 518129 (CN); LIU, Fangchao, Shenzhen, Guangdong 518129 (CN); ZHANG, Xinyu, Shenzhen, Guangdong 518129 (CN); CHENG, Xiaohua, Shenzhen, Guangdong 518129 (CN); CAO, Zhao, Shenzhen, Guangdong 518129 (CN); ZHAO, Shiqi, Shenzhen, Guangdong 518129 (CN); LIU, Xiaobo, Shenzhen, Guangdong 518129 (CN)
(74) Representative: Pfenning, Meinig & Partner mbB
(86) International application number: PCT/CN2024/125254
(87) International publication number: WO 2025/082399

(57) **Abstract**

Embodiments of this application disclose a search method and apparatus, to improve accuracy of a search result. The method in embodiments of this application includes: receiving search content, where the search content includes a word or a question entered by a user; and generating a search result based on the search content, where the search result includes a text result and a service slot, the text result is used to display an answer corresponding to the search content, the service slot is used to link a service plug-in, the service plug-in corresponds to the search content, and the search result includes service plug-ins from different information sources.

## Description

This application claims priority to Chinese Patent Application No. 202311375027.4, filed with the China National Intellectual Property Administration on October 20, 2023 and entitled "SEARCH METHOD AND APPARATUS", which is incorporated herein by reference in its entirety.

### TECHNICAL FIELD

Embodiments of this application relate to the computer field, and in particular, to a search method and apparatus.

### BACKGROUND

With the development of information retrieval technologies, a search system gradually evolves to a more accurate and intelligent question answering search system. The question answering search system is an advanced form of the search system. The question answering search system can retrieve a corresponding web page document based on search content of a user, extract and integrate content of the web page document based on a deep learning model, and directly generate a search result.

In a current question answering search system, in a process in which the search system generates a search result corresponding to search content, a user needs to pre-specify an information source plug-in required for generating the search result, and a quantity of information source plug-ins that can be specified by the user is limited. When the user specifies an inappropriate information source plug-in, the search system can still generate a search result only based on the specified information source plug-in. As a result, accuracy of the search result is poor.

### SUMMARY

Embodiments of this application provide a search method. In the search method, a search system can perform multi-information source retrieval based on a search word to obtain a service plug-in corresponding to the search word, and generate a search result that carries the service plug-in, thereby improving search accuracy of the search system. Embodiments of this application further provide a search apparatus, a compute device, a compute device cluster, a terminal device, a computer-readable storage medium, and a computer program product that correspond to the search method.

According to a first aspect, an embodiment of this application provides a search method. The method may be performed by a search system, or may be performed by a component of a search system, for example, a processor, a chip, or a chip system of the search system, or may be implemented by a logical module or software that can implement all or some functions of a search system. The search method provided in the first aspect includes: The search system receives search content, where the search content includes a word or a question entered by a user. The search system generates a search result based on the search content, where the search result includes a text result and a service slot, the text result is used to display an answer corresponding to the search content, the service slot is used to link a service plug-in, the service plug-in corresponds to the search content, the search result includes service plug-ins from different information sources, and a plurality of information sources include one or more of the following: web page data, local data, historical data, and application service data.

In embodiments of this application, the search system can generate, based on the search content entered by the user, the search result including the text and the service plug-in. The service plug-in in the search result may be the service plug-ins from the different information sources. In comparison with a search result generated by a current search system based on a specified service plug-in, in embodiments of this application, the search result is generated based on a meta service obtained by performing multi-information source retrieval, and no service plug-in needs to be specified, thereby improving accuracy of the search result.

In a possible implementation, a plurality of search words are generated based on the search content, where the plurality of search words include at least one first search word, and the first search word indicates semantics that is not included in the search content. The plurality of search words are used to perform multi-information source retrieval, so as to retrieve the service plug-in corresponding to the search words.

In embodiments of this application, the search system can generate the plurality of search words based on the search content, and the plurality of search words include a search word that is potentially associated with the search content. The search word that is potentially associated may indicate the semantics that is not included in the search content. Therefore, a search scope of the service plug-in is expanded, and richness of the service plug-in in the search result is improved.

In a possible implementation, the plurality of search words are related to the search content entered by the user and context information, and the context information includes one or more of the following: historical search content of the user and a historical search result.

In embodiments of this application, the search system can analyze, with reference to the historical search content of the user and the historical search result, a search word related to current search content of the user, thereby improving accuracy of the search word corresponding to the search content.

In a possible implementation, the search system provides a user display interface, where the user display interface is used to display the search content, the plurality of search words, and the search result. The plurality of search words are displayed before the search result. When the plurality of search words do not meet search intent of the user, the user can interrupt the search on the user display interface, or modify the search content to regenerate a plurality of search words.

In embodiments of this application, the search system can provide the user display interface to display the search content, the plurality of search words, and the search result, thereby improving interaction performance of the search system.

In a possible implementation, the search system screens for a target service plug-in in a plurality of service plug-ins corresponding to the search words according to a screening rule, where the target service plug-in is used to fill the service slot, and the screening rule includes one or more of the following: user-defined screening and bidding ranking screening. User-defined screening includes user preference screening and manual screening by the user, and the search system fills the target service plug-in into the service slot in the search result.

In embodiments of this application, when one search word corresponds to a plurality of service plug-ins, the search system can screen for the target service plug-in in the plurality of service plug-ins based on the screening rule, and fill the target service plug-in into a corresponding service slot in the search result, thereby improving accuracy of the target service plug-in and further improving accuracy of the search result.

In a possible implementation, in a process in which the search system generates, based on the service plug-in, the search result corresponding to the search content, the search system generates a structured search result based on a user-defined schema (schema), where the user-defined schema defines a data format of the search result as a text result with a service slot. The text result is a text search result generated by processing, based on a deep learning model, the search content entered by the user. The deep learning model may be a large-scale pre-trained language model, and the language model can obtain language knowledge and a context understanding capability by learning massive text data.

In embodiments of this application, the search system can generate the structured search result based on the user-defined structure schema, and can generate the text result in the search result based on the deep learning model, thereby improving accuracy of the search result.

In a possible implementation, the search system verifies the accuracy of the search result based on an evaluation model, where the accuracy indicates a correlation between the target service plug-in and the search result, including a correlation between the target service plug-in and a corresponding text result, and a matching degree between different target service plug-ins. When the accuracy is lower than a preset threshold, a target service plug-in is re-screened for, and the search result is generated based on the target service plug-in that is re-screened for. When the accuracy is lower than a preset threshold, a target service plug-in is re-screened for, and the search result is generated based on the target service plug-in that is re-screened for. When the accuracy is greater than or equal to the preset threshold, the search result is output.

In embodiments of this application, the search system can verify the accuracy of the search result based on the evaluation model, thereby improving the accuracy of the search result.

In a possible implementation, the search system displays a mark of the service slot on the display interface of the search result, where the mark is used to guide user equipment to invoke the service plug-in corresponding to the service slot. The mark of the service slot may be used to perform marking in a manner of using a font color, highlighting a text, adding a border, or adding a button.

In embodiments of this application, the search system can highlight the service slot based on the mark of the service slot, to guide the user to invoke the service plug-in corresponding to the service slot, thereby improving a click-through rate of the service slot.

In a possible implementation, the search system invokes, based on a user operation performed by the user on the service slot, an application programming interface corresponding to the service plug-in in the service slot, where the user operation includes clicking or selecting. When the user operation is clicking, after the user clicks the service slot, the search system may jump to, on the display interface, a page of the service plug-in corresponding to the service slot. When the user operation is selecting, after the user moves a cursor to the service slot, the search system may display, on the display interface, detailed information of the service plug-in corresponding to the service slot.

In embodiment of this application, the search system can invoke the service plug-in in the service slot based on the user operation performed by the user on the service slot, thereby improving convenience of invoking the service plug-in by the user in the search result, and further improving search efficiency of the user.

In a possible implementation, the search system recommends one or more pieces of next search content to the user based on the search result, where the next search content is search content that the user is likely to be interested in. Based on prediction on the next search content of the user, the search system can generate a corresponding search result based on the next search content.

In embodiments of this application, the search system can recommend the next search content to the user based on the search result, thereby improving search efficiency of the search of the user.

In a possible implementation, a service provided by the service plug-in includes one or more of the following: a details page query service, a subscription service, and a weather service. The subscription service includes, for example, an air ticket booking service, a hotel booking service, a ticket booking service, a car rental booking service, and a meal booking service.

In embodiments of this application, the search system can generate a search result based on a plurality of different types of service plug-ins, thereby improving accuracy of the search result.

In a possible implementation, the search system identifies different types of service plug-ins based on different marks of service slots. For example, the search system distinguishes the query service, the subscription service, and the weather service based on different colors of the service slots.

In embodiments of this application, the search system can identify different types of service plug-ins based on the different marks of the service slots, thereby improving efficiency of selecting a service plug-in by the user.

According to a second aspect, an embodiment of this application provides a search method. The method may be performed by a terminal device, or may be performed by a component of a terminal device, for example, a processor, a chip, or a chip system of the terminal device, or may be implemented by a logical module or software that can implement all or some functions of a terminal device. The search method provided in the first aspect includes: The terminal device displays a user display interface, where the user display interface is used to display a search input box. The terminal device receives search content entered by a user through the search input box, where the search content includes a word or a question entered by the user. The terminal device displays, on the user display interface in response to a click to search operation performed by the user on the search content, a search result corresponding to the search content, where the search result includes a text result and a service slot, the service slot is used to link a service plug-in, the service plug-in corresponds to the search content, and the search result includes service plug-ins from different information sources.

In embodiments of this application, the terminal device can provide the user display interface of the search result. The search result includes the text result and the service slot, and the service slot can link the service plug-ins from the different information sources, thereby improving accuracy of the search result.

In a possible implementation, the terminal device displays a mark of the service slot on the user display interface, where the mark is used to guide the user to perform a user operation on the service slot, and the user operation includes clicking or selecting.

In a possible implementation, the terminal device displays, on the user display interface in response to the user operation performed by the user on the service slot, a service provided by the service plug-in corresponding to the service slot, where the service provided by the service plug-in includes one or more of the following: a details page query service, a subscription service, and a weather service.

In a possible implementation, the terminal device displays recommended search content on the user display interface, where the recommended search content is one or more pieces of search content that the user is likely to be interested in and that are generated based on the search result.

In a possible implementation, the terminal device displays, on the user display interface in response to a click operation performed by the user on the recommended search content, a search result corresponding to the recommended search content, where the search result corresponding to the recommended search content includes the text result and the service slot.

According to a third aspect, an embodiment of this application provides a search apparatus. The search apparatus includes a transceiver unit, a processing unit, and a display unit. The transceiver unit is configured to receive search content, where the search content includes a word or a question entered by a user. The processing unit is configured to generate a search result based on the search content, where the search result includes a text result and a service slot, the text result is used to display an answer corresponding to the search content, the service slot is used to link a service plug-in, the service plug-in corresponds to the search content, and the search result includes service plug-ins from different information sources.

In a possible implementation, the processing unit is specifically configured to: generate a plurality of search words based on the search content, where the plurality of search words include at least one first search word, and the first search word indicates semantics that is not included in the search content; and perform retrieval on the different information sources based on the plurality of search words, to obtain the service plug-in corresponding to the plurality of search words.

In a possible implementation, the plurality of search words are related to the search content entered by the user and context information, and the context information includes one or more of the following: historical search content of the user and a historical search result.

In a possible implementation, the display unit is configured to provide a user display interface, where the user display interface is used to display the search content, the plurality of search words, and the search result.

In a possible implementation, the processing unit is further configured to: verify accuracy of the search result based on an evaluation model, where the accuracy indicates a correlation between the service plug-in and the search result; and when the accuracy is lower than a preset threshold, regenerate the search result.

In a possible implementation, the display unit is further configured to display a mark of the service slot on the user display interface, where the mark is used to guide user equipment to invoke the service plug-in that corresponds to the service slot, and marks of service slots corresponding to different types of service plug-ins are different.

In a possible implementation, the processing unit is further configured to invoke, based on a user operation performed by the user on the service slot, an application programming interface corresponding to the service plug-in in the service slot, where the user operation includes clicking or selecting.

In a possible implementation, the processing unit is further configured to recommend one or more pieces of next search content to the user based on the search result, where the next search content is search content that the user is likely to be interested in.

In a possible implementation, a service provided by the service plug-in includes one or more of the following: a details page query service, a subscription service, and a weather service.

According to a fourth aspect, an embodiment of this application provides a search apparatus. The search apparatus includes a transceiver unit, a processing unit, and a display unit. The display unit is configured to display a user display interface, where the user display interface is used to display a search input box. The transceiver unit is configured to receive search content entered by a user through the search input box, where the search content includes a word or a question entered by the user. The processing unit is configured to respond to a click to search operation performed by the user on the search content. The display unit is further configured to display, on the user display interface, a search result corresponding to the search content, where the search result includes a text result and a service slot, the service slot is used to link a service plug-in, the service plug-in corresponds to the search content, and the search result includes service plug-ins from different information sources.

In a possible implementation, the display unit is further configured to display a mark of the service slot on the user display interface, where the mark is used to guide the user to perform a user operation on the service slot, and the user operation includes clicking or selecting.

In a possible implementation, the processing unit is further configured to respond to the user operation performed by the user on the service slot. The display unit is further configured to display, on the user display interface, a service provided by the service plug-in corresponding to the service slot, where the service provided by the service plug-in includes one or more of the following: a details page query service, a subscription service, and a weather service.

In a possible implementation, the display unit is further configured to display recommended search content on the user display interface, where the recommended search content is one or more pieces of search content that the user is likely to be interested in and that are generated based on the search result.

In a possible implementation, the processing unit is further configured to respond to a click operation performed by the user on the recommended search content. The display unit is further configured to display, on the user display interface, a search result corresponding to the recommended search content, where the search result corresponding to the recommended search content includes the text result and the service slot.

According to a fifth aspect, an embodiment of this application provides an electronic device. The electronic device includes a processor, the processor is coupled to a memory, the processor is configured to store instructions, and when the instructions are executed by the processor, the electronic device is enabled to perform the method according to any one of the first aspect or the possible implementations of the first aspect, or the electronic device is enabled to perform the method according to any one of the second aspect or the possible implementations of the second aspect.

According to a sixth aspect, an embodiment of this application provides a computer-readable storage medium, where the computer-readable storage medium stores instructions, and when the instructions are executed, a computer is enabled to perform the method according to any one of the first aspect or the possible implementations of the first aspect, or a computer is enabled to perform the method according to any one of the second aspect or the possible implementations of the second aspect.

According to a seventh aspect, an embodiment of this application provides a computer program product, where the computer program product includes instructions, and when the instructions are executed, a computer is enabled to implement the method according to any one of the first aspect or the possible implementations of the first aspect, or a computer is enabled to implement the method according to any one of the second aspect or the possible implementations of the second aspect.

It may be understood that, for beneficial effect that can be achieved by any one of the search apparatus, the electronic device, the computer-readable medium, the computer program product, or the like provided above, refer to beneficial effect in the corresponding method. Details are not described herein again.

### BRIEF DESCRIPTION OF DRAWINGS

FIG. 1 is a diagram of a system architecture of a search system according to an embodiment of this application;
FIG. 2 is a schematic flowchart of a search method according to an embodiment of this application;
FIG. 3 is a schematic flowchart of another search method according to an embodiment of this application;
FIG. 4 is a diagram of a search display interface according to an embodiment of this application;
FIG. 5 is a diagram of multi-information source retrieval according to an embodiment of this application;
FIGS. 6A-6C are diagrams of generating a search result according to an embodiment of this application;
FIG. 7 is a diagram of filling a service slot according to an embodiment of this application;
FIG. 8 is a schematic flowchart of generating a search result according to an embodiment of this application;
FIG. 9 is a diagram of a search apparatus according to an embodiment of this application; and
FIG. 10 is a diagram of a structure of an electronic device according to an embodiment of this application.

### DESCRIPTION OF EMBODIMENTS

Embodiments of this application provide a search method and apparatus, to improve search accuracy of a search system.

In the specification, claims, and accompanying drawings of this application, the terms "first", "second", "third", "fourth", and so on (if existent) are intended to distinguish between similar objects but do not necessarily indicate a specific order or sequence. It should be understood that the terminology termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

First, some terms in embodiments of this application are described, to help a person skilled in the art understand the technical solutions.

A query (query) indicates search content entered by a user in a search box when the user uses a search system. The query is, for example, a word or a question.

A personalized search indicates that a user is provided with a more personalized search result based on user settings and information such as historical search records. For example, based on an existing text search, a clickable button may be added, so that the user can perform a related operation by clicking the button to invoke a background service.

A service slot indicates a variable used to store a related service plug-in or data in a search result. For example, if a user wants to book an air ticket, the user may use a button as a service slot, and click the button to invoke a related ticket booking service. In a broad sense, the service slot may be a variable that stores any information, for example, a variable used to store user input information. The service slot may be optional content in the search result, and a default value may be set for the service slot.

Context (context) indicates a historical query word of a user, a search result returned by a search system, and other related information.

A conversational search indicates that a multi-round dialog capability is added to a question answering search so that a search system can understand context, thereby implementing a multi-round continuous question answering function.

Query generation indicates that a search system outputs, based on a query term entered by a user and context, one or more search words that are easier for the search system to understand. For example, the user enters the query term "I will travel to Xinjiang tomorrow. Please help me plan an itinerary". The search system performs query and generates outputs "Xinjiang travel guides", "Xinjiang folk customs", "Xinjiang weather", and "Xinjiang air tickets".

To make the technical solutions of this application clearer and easier to understand, the following describes a system architecture of this application with reference to the accompanying drawings.

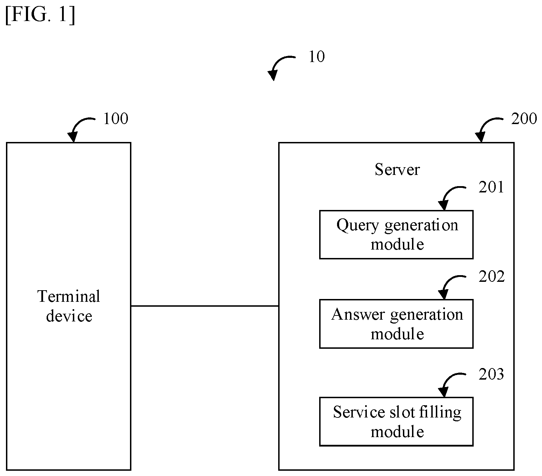

Refer to FIG. 1. FIG. 1 is a diagram of a system architecture of a search system according to an example of this application. In the example shown in FIG. 1, the search system 10 includes a terminal device 100 and a server 200. The server 200 includes a query generation module 201, an answer generation module 202, and a service slot filling module 203. The following specifically describes functions of each part of the search system 10.

The terminal device 100 is configured to provide an electronic device for a user to use the search system. A browser and a search application may be deployed in the terminal device 100, and the browser and the search application can invoke an interface of a search engine in the server 200. Specifically, the user may access the search engine in the server 200 through the browser or the search application on the terminal device 100, so as to complete searching for search content entered by the user. The search content entered by the user may be a word or a question.

The terminal device 100 is further configured to provide a display interface of a search result. The display interface is used to display the search result generated by the search engine in the server 200 based on the search content. The search result includes a text result and a service slot. The user may view the search result through the display interface, or may directly access a corresponding service by clicking the service slot in the search result through the display interface. In addition, the user can implement a continue-to-search function through the display interface.

The terminal device 100 in embodiments of this application may be an electronic device like a mobile phone, a computer, a tablet computer, a notebook computer, a netbook, a personal digital assistant (personal digital assistant, PDA), a wearable electronic device, or a smartwatch. This is not specifically limited.

The server 200 is configured to provide the search engine for the user, and generate the search result based on the search content entered by the user. Specifically, the server 200 identifies a search word based on the search content entered by the user, performs multi-information source retrieval based on the identified search word, to obtain a meta service corresponding to the search word. The server 200 generates, based on the meta service, the search result corresponding to the search content, where the search result includes a service slot of a service plug-in.

The query generation module 201 is configured to determine the search word based on the search content entered by the user, perform multi-information source retrieval based on the search word, and determine one or more service plug-ins corresponding to the search word. A plurality of information sources include one or more of the following: web page data, local data, historical data, and application service data. The historical data includes, for example, historical search content and a historical search result. The application service data includes, for example, a news application, a weather application, a stock application, and a Q&A box application.

The answer generation module 202 is configured to generate the search result with the service slot based on the search content entered by the user. Specifically, the answer generation module 202 generates the text result in the search result based on a deep learning model, and generates the service slot at a corresponding position in the text result based on the search word determined by the query generation module 201.

The service slot filling module 203 is configured to fill the service slot in the search result generated by the answer generation module 202 with a service plug-in. Specifically, the service slot filling module 203 can determine, from the one or more service plug-ins corresponding to the search word, a service plug-in that needs to be filled into the service slot. Specifically, the service slot filling module 203 can determine, based on user-defined screening or bidding ranking screening, the service plug-in that needs to be filled into the service slot.

It should be noted that, in some possible system architectures, all or some functions implemented by the server 200 in the search system 10 in the search method may alternatively be implemented in the terminal device 100, and all or some functions implemented by the terminal device 100 in the search method may alternatively be implemented in the server 200. This is not limited in embodiments of this application.

In addition to being applied to a personalized search, the search system 10 provided in embodiments of this application may be further applied to application scenarios such as a voice assistant, a virtual assistant, and a session robot. This is not specifically limited.

Based on the search system 10 shown in FIG. 1, this application further provides a search method. The following describes the search method provided in embodiments of this application with reference to embodiments.

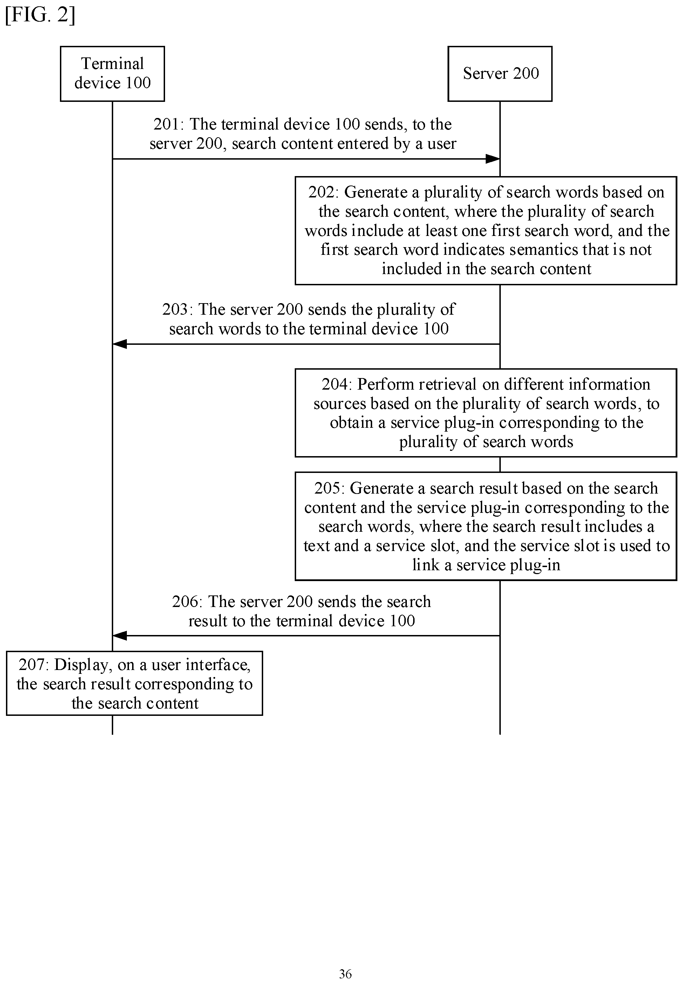

Refer to FIG. 2. FIG. 2 is a schematic flowchart of a search method according to an embodiment of this application. In an example shown in FIG. 2, the method includes the following steps.

201: The terminal device 100 sends, to the server 200, search content entered by a user.

The user enters the search content on a user display interface provided by the terminal device 100. The search content is a query (query) entered by the user, and the search content includes a word or a question entered by the user. The terminal device 100 sends a search request to the server 200, where the search request includes the search content entered by the user.

202: The server 200 generates a plurality of search words based on the search content, where the plurality of search words include at least one first search word, and the first search word indicates semantics that is not included in the search content.

The server 200 performs search word identification based on the search content entered by the user, to obtain the plurality of search words, where the plurality of search words include the at least one first search word, and the first search word indicates the semantics that is not included in the search content. In other words, the plurality of search words can indicate a search word that is not included in the search content and that may be potentially associated with the search content. In this way, the server 200 can further retrieve service plug-ins based on the search words, and retrieve a service plug-in that may be required by the user. In embodiments of this application, the search word may also be understood as a sub-query obtained by performing potential search intent analysis based on the query.

Specifically, in a process in which the server 200 performs search word identification, the server 200 can perform search based on the search content entered by the user and context information, to determine the plurality of search words, where the context information includes one or more of the following: historical search content of the user and a historical search result.

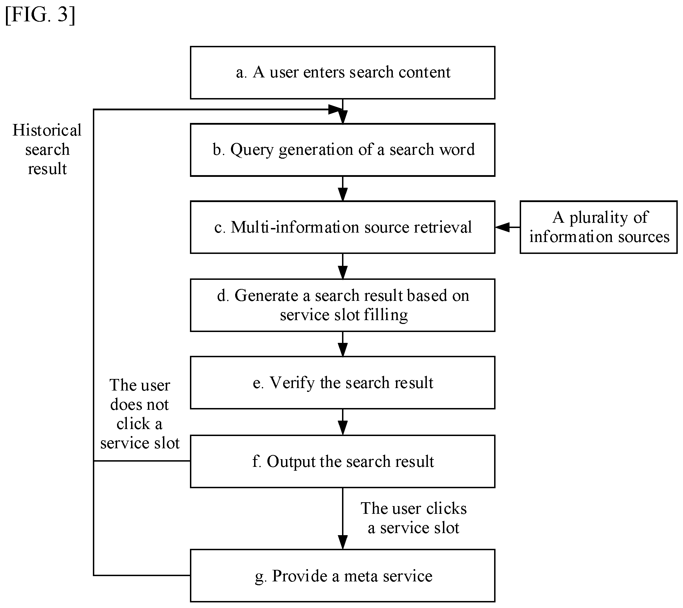

Refer to FIG. 3. FIG. 3 is a schematic flowchart of a search method according to an embodiment of this application. In step a and step b shown in FIG. 3, after the user enters the search content through the terminal device 100, the terminal device 100 sends the search content to the server 200, and the server 200 performs user intent analysis based on the search content and the context information, and determines one or more search words corresponding to user intent.

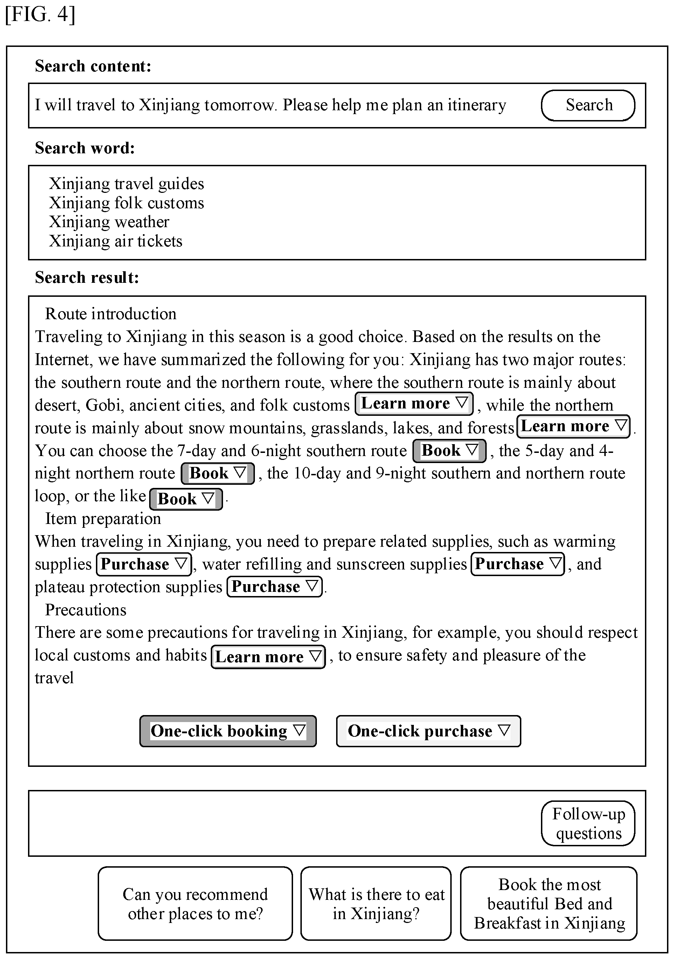

Refer to FIG. 4. FIG. 4 is a diagram of a user display interface according to an embodiment of this application. In an example shown in FIG. 4, the search content entered by the user is, for example, "I will travel to Xinjiang tomorrow. Please help me plan an itinerary". After receiving the search word entered by the user, the server 200 analyzes the search intent of the user based on the search content, and generates the one or more search words. The search words generated by the server 200 are, for example, "Xinjiang travel guides", "Xinjiang folk customs", "Xinjiang weather", and "Xinjiang air ticket". The search content "I will travel to Xinjiang tomorrow. Please help me plan an itinerary" does not include semantics such as "Xinjiang folk customs", "Xinjiang weather", and "Xinjiang air ticket". "Xinjiang folk customs", "Xinjiang weather", and "Xinjiang air ticket" are the search words that are identified by the server 200 and that are potentially associated with the search content.

In the example shown in FIG. 4, in a process in which the server 200 generates the search words, the server 200 performs search intent analysis based on the search content entered by the user and the context information, to determine the search intent of the user. For example, before searching for "I will travel to Xinjiang tomorrow. Please help me plan an itinerary", the user further searches for information such as "What is the weather in Xinjiang?" and "What are the ethnic minorities in Xinjiang?". The server 200 may determine, based on the search content "I will travel to Xinjiang tomorrow. Please help me plan an itinerary" and the context information, that possible search intent of the user is to search for Xinjiang-related travel guides, folk customs, weather, air tickets, and the like. In this way, the server 200 generates the search words "Xinjiang travel guides", "Xinjiang folk customs", "Xinjiang weather", and "Xinjiang air tickets" based on the foregoing search intent.

203: The server 200 sends the plurality of search words to the terminal device 100.

After identifying the plurality of search words based on the search content entered by the user, the server 200 sends the plurality of generated search words to the terminal device 100. The terminal device 100 displays the plurality of search words corresponding to the search content on the user display interface.

Still refer to FIG. 4. In the example shown in FIG. 4, after the user enters the search content in a search box on the user display interface and performs a click to search operation, the server 200 may determine the plurality of search words based on the search content and the context information, and display the search words on a search display interface. For example, the user enters the search content "I will travel to Xinjiang tomorrow. Please help me plan an itinerary" and performs the click to search operation. The plurality of search words "Xinjiang folk customs", "Xinjiang weather", and "Xinjiang air tickets" corresponding to the search content are displayed on the user display interface.

204: The server 200 performs retrieval on different information sources based on the plurality of search words, to obtain a service plug-in corresponding to the plurality of search words.

After the server 200 identifies the plurality of search words based on the search content, the server 200 performs multi-information source retrieval based on the search words, to obtain a plurality of service plug-ins corresponding to the search words. A service provided by the service plug-ins includes, for example, a details page query service, a subscription service, and a weather service. The subscription service includes, for example, an air ticket booking service, a hotel booking service, a scenic spot ticket booking service, and a meal booking service.

A plurality of information sources include one or more of the following: web page data, local data, historical data, and application service data. The web page data includes, for example, a text, an image, and a link in the browser. The local data includes, for example, data stored in the terminal device 100. The historical data includes, for example, historical search content and a historical search result. The application service data includes data provided by different applications, and the applications include, for example, a news application, a weather application, and a stock application.

Still refer to FIG. 3. In step c in the example shown in FIG. 3, after the server 200 determines the one or more search words, the server 200 performs multi-information source retrieval on each search word, to determine the plurality of service plug-ins corresponding to the search words. For example, after the server 200 determines that the search word is "Xinjiang air tickets", the server 200 retrieves a meta service related to "Xinjiang air tickets" in the different information sources, and the server 200 retrieves one or more service plug-ins that can provide the ticket booking service.

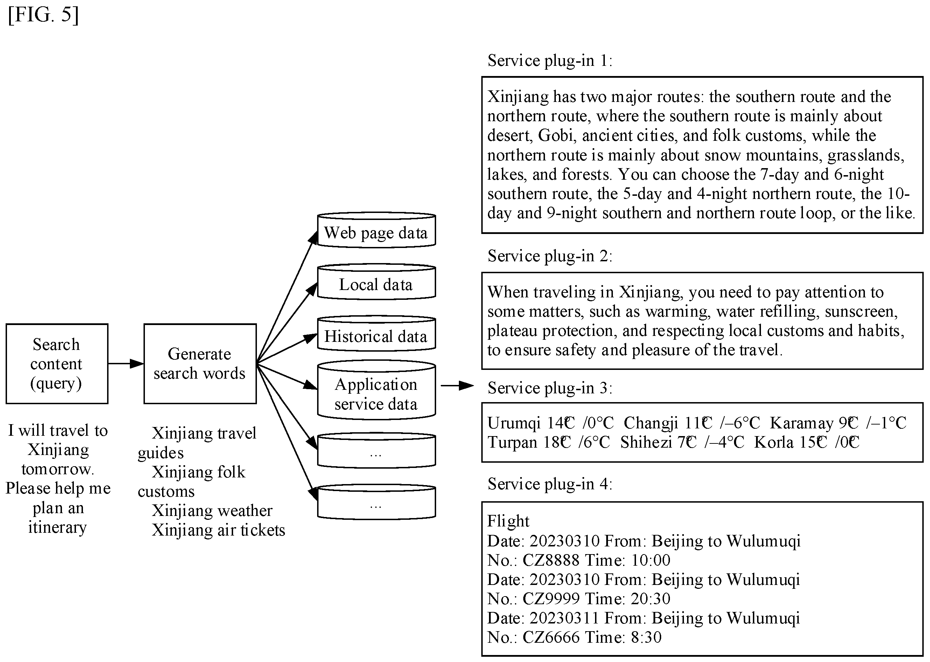

Refer to FIG. 5. FIG. 5 is a diagram of performing multi-information source retrieval by a search system according to an embodiment of this application. In an example shown in FIG. 5, after determining the one or more search words based on the search content, the server 200 performs multi-information source retrieval on the search words. For example, the server 200 performs retrieval on information sources such as the web page data, the local data, and the application service data based on the search words "Xinjiang travel guides", "Xinjiang folk customs", "Xinjiang weather", and "Xinjiang air tickets", to obtain one or more meta services corresponding to the search words.

In the example shown in FIG. 5, a service plug-in 1 retrieved by the server 200 based on the search word "Xinjiang travel guides" is a details page query service plug-in. The service plug-in 1 is, for example, a web page link of a travel introduction. A service plug-in 2 retrieved by the server 200 based on the search word "Xinjiang folk customs" is a details page query service plug-in. The service plug-in 2 is, for example, a web page link of a folk customs introduction. A service plug-in 3 retrieved by the server 200 based on the search word "Xinjiang weather" is a weather service plug-in. The service plug-in 3 is, for example, a weather forecast service of each city in Xinjiang provided by the weather application. A service plug-in 4 retrieved by the server 200 based on the search word "Xinjiang air tickets" is a booking service plug-in. The service plug-in 4 is, for example, a Xinjiang-related flight booking service provided by a ticket booking application.

It should be noted that, in embodiments of this application, in a process of determining the service plug-in corresponding to the search words, the server 200 does not determine the service plug-in corresponding to the search words based on a description document of the service plug-in, but performs real-time online search on the plurality of information sources. In addition, a quantity of information sources for performing multi-information source retrieval by the server 200 is not limited in embodiments of this application.

205: The server 200 generates a search result based on the search content and the service plug-in corresponding to the search words, where the search result includes a text and a service slot, and the service slot is used to link a service plug-in.

After the server 200 retrieves the service plug-in based on the search words, the server 200 generates, based on the service plug-in, the search result corresponding to the search content. The search result includes the text result and the service slot. The text result is used to display an answer that corresponds to the search content and that is generated based on a deep learning model. The service slot is used to fill the service plug-in obtained based on the multi-information source retrieval.

Specifically, in a process in which the server 200 generates, based on the service plug-in, the search result corresponding to the search content, the server 200 generates a structured search result based on a user-defined schema (schema), where the user-defined schema defines a data format of the search result as a text result with a service slot. The text result is a text search result generated by the server 200 by processing, based on the deep learning model, the search content entered by the user. The deep learning model may be a large-scale pre-trained language model, and the deep learning model can obtain language knowledge and a context understanding capability by learning massive text data.

In addition, the server 200 identifies, in the text result, a text associated with the search word, and generates a service slot at a corresponding position, where the service slot is used to fill the service plug-in corresponding to the search words. For different types of service plug-ins, the server 200 may use different marks of service slots to distinguish between the different types of service plug-ins.

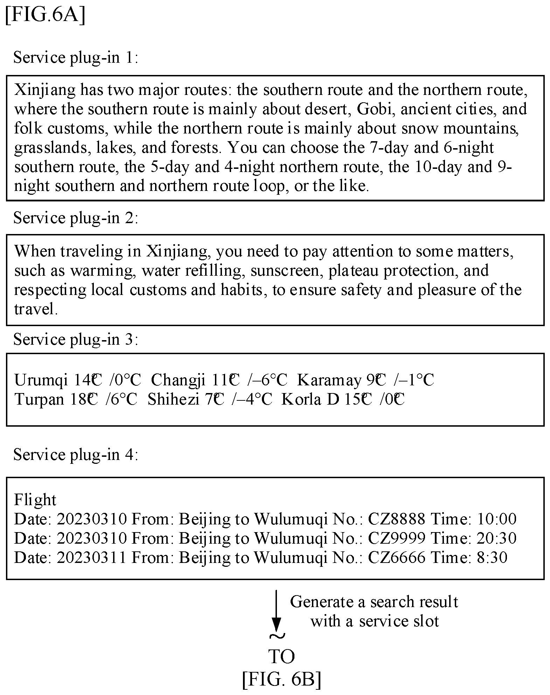

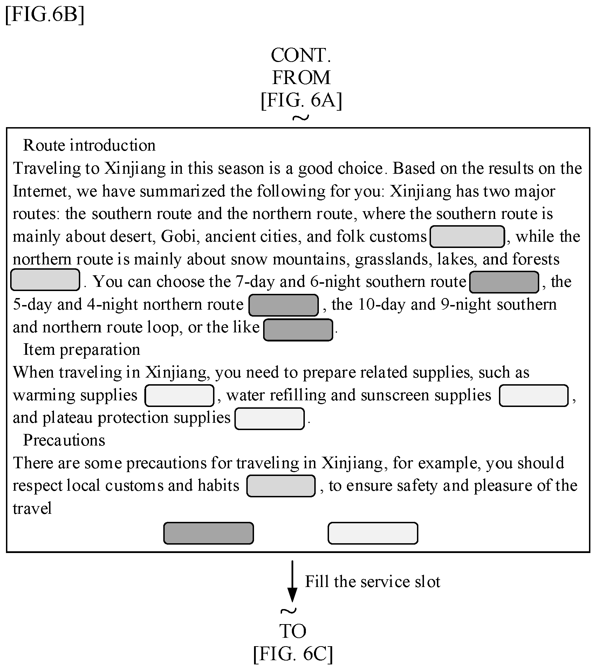

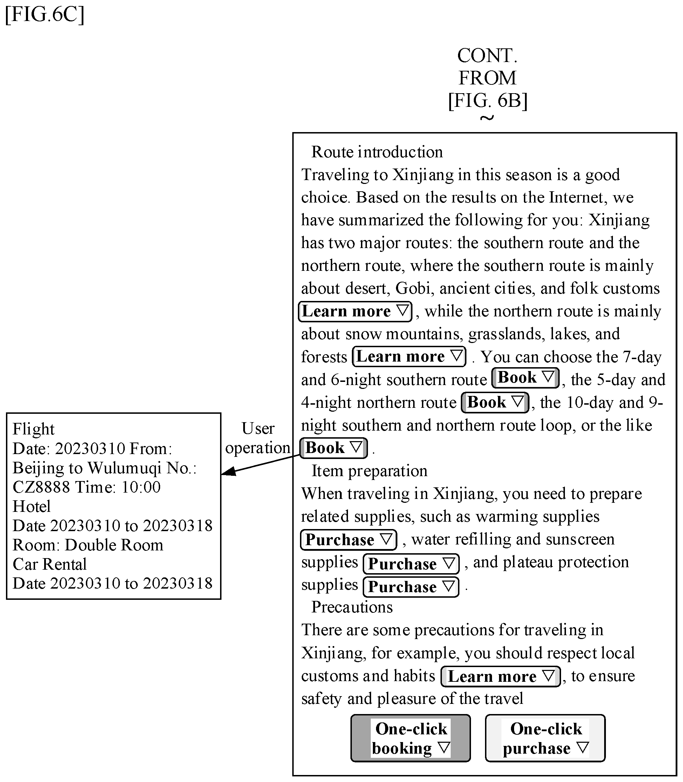

Refer to FIGS. 6A-6C. FIGS. 6A-6C are diagrams of generating a search result by a server according to an embodiment of this application. In an example shown in FIGS. 6A-6C, FIG. 6A shows service plug-ins obtained by the server 200 through retrieval based on the search words, and meta services provided by different service plug-ins include, for example, the details page query service, the weather server, and the ticket booking service. FIG. 6B is a search result with service slots generated by the server 200. A text result of the search result includes, for example, "Route introduction", "Item preparation", and precautions. The service slots are, for example, slot frames embedded in the text result. In FIG. 6B, the service slots in the search result are not filled with service plug-ins.

In the example shown in FIGS. 6A-6C, FIG. 6C is a search result after the service slots are filled. In the filled service slots, there are, for example, service plug-ins such as "Learn more", "Book", and "Purchase" embedded in the text result. The user can obtain, based on these service slots, the meta services corresponding to the service plug-ins. For example, when the user needs to book a "5-day and 4-night northern route", the user may directly obtain, through a service slot corresponding to the "5-day and 4-night northern route", meta services such as the air ticket booking service, a hotel booking service, and a car rental service.

It should be noted that, when the server 200 performs multi-information source retrieval based on a search word, if a plurality of corresponding service plug-ins are obtained by retrieving one search word, the server 200 screens for a target service plug-in in the plurality of service plug-ins corresponding to the search word according to a screening rule, where the target service plug-in is used to fill the service slot, and the screening rule includes one or more of the following: user-defined screening and bidding ranking screening. User-defined screening includes screening based on a historical preference of the user and manual screening by the user. After obtaining the target service plug-in through screening, the server 200 fills the target service plug-in into the service slot in the search result.

Still refer to FIG. 3. In step d to step f in the example shown in FIG. 3, the server 200 generates the search result based on service slot filling, and verifies accuracy of the search result based on an evaluation model. When the accuracy of the search result is greater than a preset threshold, the server 200 outputs the search result on the display interface.

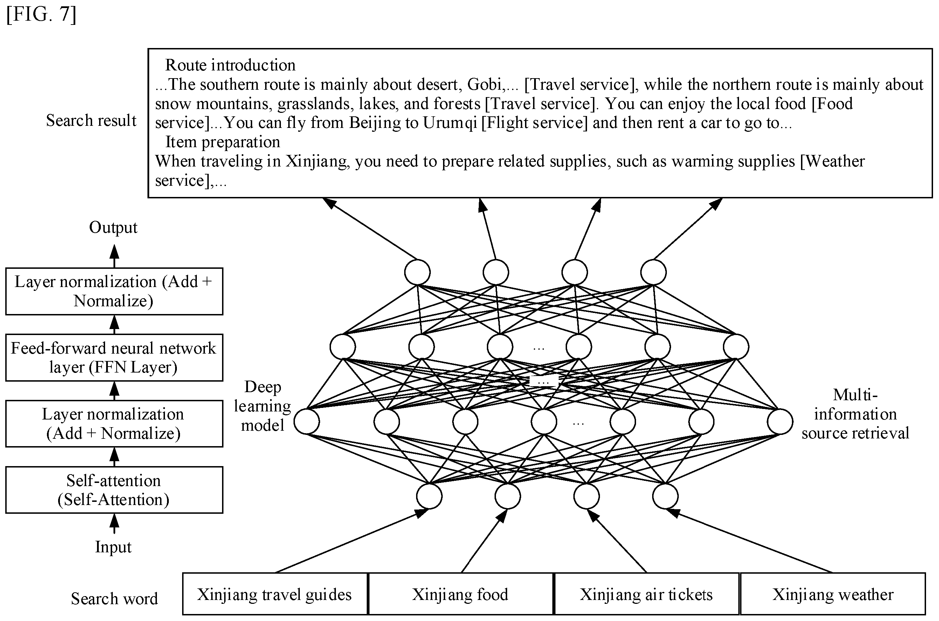

Refer to FIG. 7. FIG. 7 is a diagram of filling a service slot by a server according to an embodiment of this application. In an example shown in FIG. 7, the server 200 can screen for the target service plug-in in the plurality of candidate services corresponding to the search word according to the screening rule.

In the example shown in FIG. 7, the air ticket service is used as an example. If the screening rule is screening based on the historical preference of the user, and if the user expresses, in a historical dialog, that the user does not like to travel in the morning, the server 200 screens for, as the target service plug-in, a noon or afternoon flight in a plurality of flights corresponding to the search word. If the screening rule is manual screening by the user, and the user specifies a flight from 12:00 to 15:00, the server 200 screens for, as the target service plug-in, a flight from 12:00 to 15:00 in the plurality of flights corresponding to the search word. If the screening rule is to perform screening in a form of bidding ranking, the server 200 determines a corresponding flight as the target service plug-in based on a comprehensive bidding ranking rule.

In a possible implementation, after the server 200 generates the search result, the server 200 needs to optimize content of the search result. Specifically, the server 200 inputs the search result including the text result and the service slot into the evaluation model. The evaluation model can verify the accuracy of the search result. The accuracy indicates a correlation between the target service plug-in and the text result in the search result, and a matching degree between different target service plug-ins. When the accuracy is lower than the preset threshold, the server 200 re-screens for the target service plug-in, and regenerates the search result.

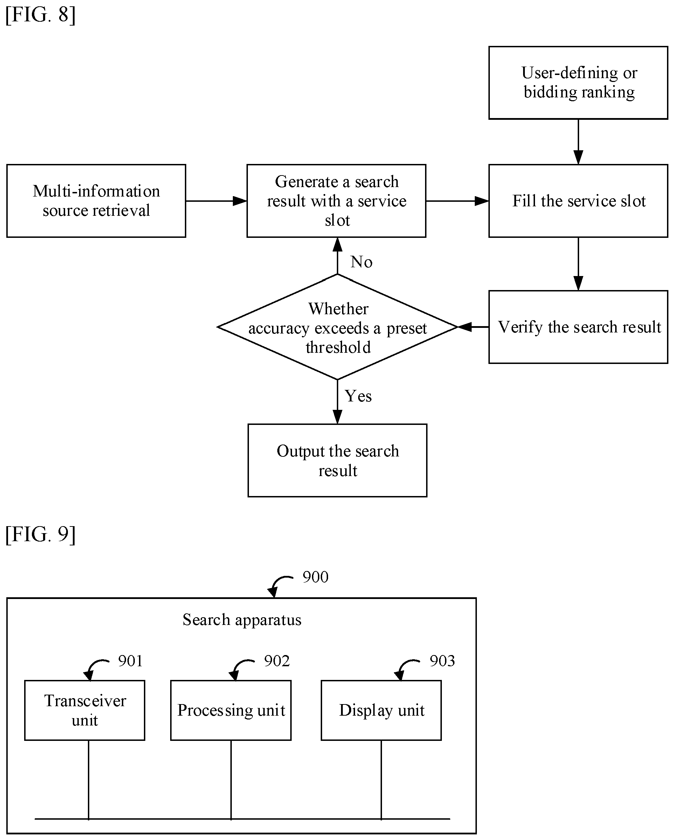

Refer to FIG. 8. FIG. 8 is a schematic flowchart of generating a search result by a server according to an embodiment of this application. In an example shown in FIG. 8, after the server 200 generates the search result with the service slot, the server 200 needs to obtain a plurality of candidate service plug-ins based on multi-information source retrieval, and perform filling on the service slot in the search result.

In the example shown in FIG. 8, before the service slot is filled, the server 200 screens for the target service plug-in in the plurality of candidate service plug-ins based on user-defined screening or bidding ranking screening, and fills the target service plug-in into the service slot in the search result.

In the example shown in FIG. 8, after filling the target service plug-in into the service slot in the search result, the server 200 further performs content optimization on the search result including the text result and the service slot. Specifically, the server 200 verifies the accuracy of the search result based on the evaluation model. If the accuracy is lower than the preset threshold, the server 200 re-screens for the target service plug-in and generates the search result. The accuracy of the search result includes the correlation between the text result in the search result and the target service plug-in, and the matching degree between the different target service plug-ins in the search result.

In the example shown in FIG. 8, in the search result, the air ticket booking meta service shows that a flight on May 10 is booked, and in the search result, the scenic spot ticket booking service shows that a scenic spot ticket on May 9 is booked. In this case, the air ticket booking service does not match the scenic spot ticket booking service. Therefore, the meta server 200 re-screens for the target service plug-in and generates the search result, and the scenic spot ticket booking service in the regenerated search result shows a service of booking a scenic spot ticket on May 10 or later.

206: The server 200 sends the search result to the terminal device 100.

After the server 200 generates the search result based on the search content, the server 200 sends the search result to the terminal device 100.

207: The terminal device 100 displays, on the user display interface, the search result corresponding to the search content.

The terminal device 100 displays, on the user display interface, the search result corresponding to the search content. The search result includes the text and the service slot. The text result is used to display the answer corresponding to the search content, the service slot is used to link the service plug-in, the service plug-in corresponds to the search content, and the search result includes service plug-ins from the different information sources. In a possible implementation, the terminal device 100 displays a mark of the service slot on the user display interface of the search result, where the mark is used to guide user equipment to invoke a meta service corresponding to the service slot. The mark of the service slot may be a mark used to highlight the service slot in a manner of using a font color, highlighting the text, adding a border to the text, or adding a button.

Still refer to FIG. 4. In the example shown in FIG. 4, in the search result generated by the terminal device 100, the service slot filled with the meta service is highlighted by using the mark of the service slot. For example, after a text result "The southern route is mainly about desert, Gobi, ancient cities, and folk customs" in the search result, the service slot "Learn more" is displayed by adding a border to the text. For another example, after a text result "You can choose the 7-day and 6-night southern route" in the search result, the service slot "Book" is displayed by adding a border to the text.

In a possible implementation, the terminal device 100 invokes, based on a user operation performed by the user on the service slot, an application programming interface corresponding to the meta service in the service slot, where the user operation includes clicking or selecting. For example, when the user operation is clicking, after the user clicks the service slot, the terminal device 100 may jump to, on the display interface, a meta service page corresponding to the service slot. When the user operation is selecting, after a cursor of the user moves to the service slot, the terminal device 100 may display, on the display interface, detailed information of the meta service corresponding to the service slot.

Still refer to FIG. 3. In step g in the example shown in FIG. 3, after the search result with the service slot is output on the user display interface, the user can click the service slot to obtain the corresponding meta service. Even if the user does not click the service slot to obtain the corresponding meta service, the server 200 may use the output search result as context information for user intent analysis during a next search, and determine a search word corresponding to user intent.

Still refer to FIG. 4. In the example shown in FIG. 4, the terminal device 100 invokes, based on the user operation performed by the user on the service slot, the application programming interface corresponding to the service plug-in in the service slot. For example, the user moves the cursor to the service slot "Learn more" after the text result "The southern route is mainly about desert, Gobi, ancient cities, and folk customs". The server 200 may display more detailed routes of the southern route on the display interface. For another example, the user clicks the service slot "Book" after the text result "You can choose the 7-day and 6-night southern route" in the search result, and the terminal device 100 may jump to, on the display interface, the air ticket booking service, a hotel booking service, and the like that are related to the southern route.

In the example shown in FIG. 4, the user display interface of the terminal device 100 further provides a service slot that can be used to invoke meta services in batches. For example, service slots "One-click booking" and "One-click purchase" are displayed on the user display interface. The user may invoke all "Book" meta services in the search result through the service slot "One-click booking", so as to implement batch invoking of the meta services.

In a possible implementation, after the server 200 generates the search result, the server 200 recommends one or more pieces of next search content to the user based on the search result, where the next search content is search content that the user is likely to be interested in. The terminal device 100 displays the recommended search content on the user display interface, where the recommended search content is one or more pieces of search content that the server 200 generates based on the search result and that the user is likely to be interested in.

Still refer to FIG. 4. In the example shown in FIG. 4, after the server 200 generates the search result including the text result and the service slot, the server 200 recommends, to the user based on the search result, one or more pieces of content that the user may further search for next time. For example, after generating the search result for the search content "I will travel to Xinjiang tomorrow. Please help me plan an itinerary", the server 200 can further recommend other search content to the user based on the search result. For example, the server 200 recommends "Can you recommend other places to me?", "What is there to eat in Xinjiang?", "Book the most beautiful Bed and Breakfast in Xinjiang", and the like on the user display interface of the terminal device 100.

It can be learned from the foregoing embodiments that, in embodiments of this application, the search system can identify the search word based on the search content entered by the user, perform multi-information source retrieval on the search word, and determine the meta service corresponding to the search word, to generate the search result including the text and the meta service, thereby improving accuracy of the search result and search efficiency.

Based on the foregoing method embodiments, an embodiment of this application further provides a search apparatus. The following specifically describes a meta service-based search apparatus provided in embodiments of this application.

Refer to FIG. 9. FIG. 9 is a diagram of a structure of a search apparatus according to an embodiment of this application. In an example shown in FIG. 9, the search apparatus 900 is configured to implement the steps performed by the terminal device 100 or the server 200 in the foregoing embodiments. The search apparatus 900 includes a transceiver unit 901, a processing unit 902, and a display unit 903.

In some optional implementations of this application, the search apparatus 900 is configured to implement the steps performed by the server 200 in the foregoing embodiments. Details are described below.

When the search apparatus 900 is configured to implement the steps performed by the server 200 in the foregoing embodiments, the transceiver unit 901 is configured to receive search content, where the search content includes a word or a question entered by a user. The processing unit 902 is configured to generate a search result based on the search content, where the search result includes a text result and a service slot, the text result is used to display an answer corresponding to the search content, the service slot is used to link a service plug-in, the service plug-in corresponds to the search content, and the search result includes service plug-ins from different information sources.

In a possible implementation, the processing unit 902 is specifically configured to: generate a plurality of search words based on the search content, where the plurality of search words include at least one first search word, and the first search word indicates semantics that is not included in the search content; and perform retrieval on the different information sources based on the plurality of search words, to obtain the service plug-in corresponding to the plurality of search words.

In a possible implementation, the plurality of search words are related to the search content entered by the user and context information, and the context information includes one or more of the following: historical search content of the user and a historical search result.

In a possible implementation, the display unit 903 is configured to provide a user display interface, where the user display interface is used to display the search content, the plurality of search words, and the search result.

In a possible implementation, the processing unit 902 is further configured to: verify accuracy of the search result based on an evaluation model, where the accuracy indicates a correlation between the service plug-in and the search result; and when the accuracy is lower than a preset threshold, regenerate the search result.

In a possible implementation, the display unit 903 is further configured to display a mark of the service slot on the user display interface, where the mark is used to guide user equipment to invoke the service plug-in that corresponds to the service slot, and marks of service slots corresponding to different types of service plug-ins are different.

In a possible implementation, the processing unit 902 is further configured to invoke, based on a user operation performed by the user on the service slot, an application programming interface corresponding to the service plug-in in the service slot, where the user operation includes clicking or selecting.

In a possible implementation, the processing unit 902 is further configured to recommend one or more pieces of next search content to the user based on the search result, where the next search content is search content that the user is likely to be interested in.

In a possible implementation, a service provided by the service plug-in includes one or more of the following: a details page query service, a subscription service, and a weather service.

It should be noted that, when the search apparatus 900 is configured to implement the steps performed by the server 200 in the foregoing embodiments, the processing unit 902 may include the query generation module, the answer generation module, and the service slot filling module in embodiments shown in FIG. 1.

In some optional implementations of this application, the search apparatus 900 is configured to implement the steps performed by the terminal device 100 in the foregoing embodiments. Details are described below.

When the search apparatus 900 is configured to implement the steps performed by the terminal device 100 in the foregoing embodiments, the display unit 903 is configured to display a user display interface, where the user display interface is used to display a search input box. The transceiver unit 901 is configured to receive search content entered by a user through the search input box, where the search content includes a word or a question entered by the user. The processing unit 902 is configured to respond to a click to search operation performed by the user on the search content. The display unit 903 is further configured to display, on the user display interface, a search result corresponding to the search content, where the search result includes a text result and a service slot, the service slot is used to link a service plug-in, the service plug-in corresponds to the search content, and the search result includes service plug-ins from different information sources.

In a possible implementation, the display unit 903 is further configured to display a mark of the service slot on the user display interface, where the mark is used to guide the user to perform a user operation on the service slot, and the user operation includes clicking or selecting.

In a possible implementation, the processing unit 902 is further configured to respond to the user operation performed by the user on the service slot. The display unit 903 is further configured to display, on the user display interface, a service provided by the service plug-in corresponding to the service slot, where the service provided by the service plug-in includes one or more of the following: a details page query service, a subscription service, and a weather service.

In a possible implementation, the display unit 903 is further configured to display recommended search content on the user display interface, where the recommended search content is one or more pieces of search content that the user is likely to be interested in and that are generated based on the search result.

In a possible implementation, the processing unit 902 is further configured to respond to a click operation performed by the user on the recommended search content. The display unit 903 is further configured to display, on the user display interface, a search result corresponding to the recommended search content, where the search result corresponding to the recommended search content includes the text result and the service slot.

It should be understood that division into units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing method or the foregoing units may be implemented by using a hardware integrated logic circuit in a processor element, or may be implemented in the form of software invoked by the processing element.

It should be noted that, for ease of description, the foregoing method embodiments are described as a series of action combinations. However, a person skilled in the art should understand that this application is not limited by the described action sequence. In addition, a person skilled in the art should also understand that embodiments described in this specification are all preferred embodiments, and the actions mentioned are not necessarily required by this application.

Another appropriate step combination that can be figured out by a person skilled in the art based on the content described above also falls within the protection scope of this application. In addition, a person skilled in the art should further understand that embodiments described in this specification all belong to preferred embodiments, and involved actions are not necessarily required by this application.

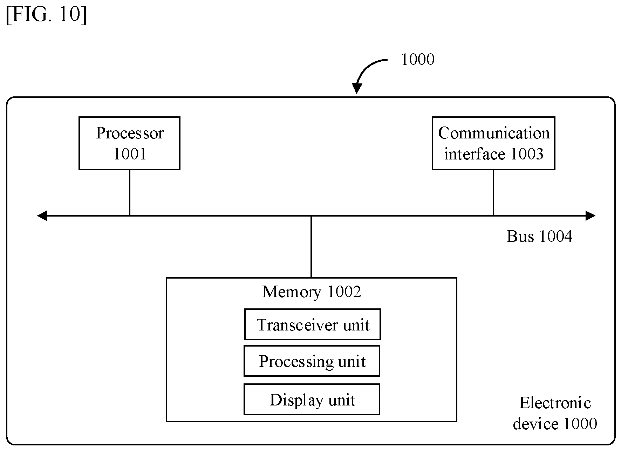

Refer to FIG. 10. FIG. 10 is a diagram of a structure of an electronic device according to an embodiment of this application. As shown in FIG. 10, the electronic device 1000 includes a processor 1001, a memory 1002, a communication interface 1003, and a bus 1004. The processor 1001, the memory 1002, and the communication interface 1003 are coupled through the bus (not marked in the figure). The memory 1002 stores instructions. When the execution instructions in the memory 1002 are executed, the electronic device 1000 performs the method performed by the terminal device 100 or the server 200 in the foregoing method embodiments.

The electronic device 1000 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus may be implemented by scheduling a program by a processing element, the processing element may be a general-purpose processor, for example, a central processing unit (central processing unit, CPU) or another processor that can invoke the program. For another example, the units may be integrated and implemented in a form of a system-on-a-chip (system-on-a-chip, SOC).

The processor 1001 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory 1002 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1002 stores executable program code, and the processor 1001 executes the executable program code to separately implement functions of the identification unit 901, the retrieval unit 902, and the processing unit 903, so as to implement the foregoing meta service-based search method. In other words, the memory 1002 stores instructions used to perform the foregoing meta service-based search method.

The communication interface 1003 uses a transceiver module, for example, but not limited to, a network interface card or a transceiver, to implement communication between the electronic device 1000 and another device or communication network.

In addition to a data bus, the bus 1004 may further include a power bus, a control bus, a state signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus may be classified as an address bus, a data bus, a control bus, and the like.

In another embodiment of this application, a computer-readable storage medium is further provided. The computer-readable storage medium stores computer-executable instructions. When a processor of a device executes the computer-executable instructions, the device performs the method performed by the terminal device 100 or the server 200 in the foregoing method embodiments.

In another embodiment of this application, a computer program product is further provided. The computer program product includes computer-executable instructions, and the computer-executable instructions are stored in a computer-readable storage medium. When the processor of the device executes the computer-executable instructions, the device performs the method performed by the terminal device 100 or the server 200 in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions to enable a computer device (which may be a personal computer, a server, a network device, or the like) to perform all or some of the steps of the method described in embodiments of this application. The storage medium includes any medium that can store program code, such as a USB flash drive, a removable hard disk, a read-only memory (ROM, read-only memory), a random access memory (RAM, random access memory), a magnetic disk, or an optical disc.

## Claims

1. A search method, comprising:
receiving search content, wherein the search content comprises a word or a question entered by a user; and
generating a search result based on the search content, wherein the search result comprises a text result and a service slot, the text result is used to display an answer corresponding to the search content, the service slot is used to link a service plug-in, the service plug-in corresponds to the search content, and the search result comprises service plug-ins from different information sources.

2. The method according to claim 1, wherein the method further comprises:
generating a plurality of search words based on the search content, wherein the plurality of search words comprise at least one first search word, and the first search word indicates semantics that is not comprised in the search content; and
performing retrieval on the different information sources based on the plurality of search words, to obtain the service plug-in corresponding to the plurality of search words.

3. The method according to claim 2, wherein the plurality of search words are related to the search content entered by the user and context information, and the context information comprises one or more of the following: historical search content of the user and a historical search result.

4. The method according to any one of claims 1 to 3, wherein the method further comprises:
providing a user display interface, wherein the user display interface is used to display the search content, the plurality of search words, and the search result.

5. The method according to any one of claims 1 to 4, wherein the method further comprises:
verifying accuracy of the search result based on an evaluation model, wherein the accuracy indicates a correlation between the service plug-in and the search result; and
when the accuracy is lower than a preset threshold, regenerating the search result.

6. The method according to claim 4, wherein the method further comprises:
displaying a mark of the service slot on the user display interface, wherein the mark is used to guide user equipment to invoke the service plug-in that corresponds to the service slot and whose corresponding service slot has a different mark.

7. The method according to any one of claims 1 to 6, wherein the method further comprises:
invoking, based on a user operation performed by the user on the service slot, an application programming interface corresponding to the service plug-in in the service slot, wherein the user operation comprises clicking or selecting.

8. The method according to any one of claims 1 to 7, wherein the method further comprises:
recommending one or more pieces of next search content to the user based on the search result, wherein the next search content is search content that the user is likely to be interested in.

9. The method according to any one of claims 1 to 8, wherein a service provided by the service plug-in comprises one or more of the following: a details page query service, a subscription service, and a weather service.

10. A search method, wherein the method comprises:
displaying a user display interface, wherein the user display interface is used to display a search input box;
receiving search content entered by a user through the search input box, wherein the search content comprises a word or a question entered by the user; and
displaying, on the user display interface in response to a click to search operation performed by the user on the search content, a search result corresponding to the search content, wherein the search result comprises a text result and a service slot, the service slot is used to link a service plug-in, the service plug-in corresponds to the search content, and the search result comprises service plug-ins from different information sources.

11. The method according to claim 10, wherein the method further comprises:
displaying a mark of the service slot on the user display interface, wherein the mark is used to guide the user to perform a user operation on the service slot, and the user operation comprises clicking or selecting.

12. The method according to claim 11, wherein the method further comprises:
displaying, on the user display interface in response to the user operation performed by the user on the service slot, a service provided by the service plug-in corresponding to the service slot, wherein the service provided by the service plug-in comprises one or more of the following: a details page query service, a subscription service, and a weather service.

13. The method according to any one of claims 10 to 12, wherein the method further comprises:
displaying recommended search content on the user display interface, wherein the recommended search content is one or more pieces of search content that the user is likely to be interested in and that are generated based on the search result.

14. The method according to claim 13, wherein the method further comprises:
displaying, on the user display interface in response to a click operation performed by the user on the recommended search content, a search result corresponding to the recommended search content, wherein the search result corresponding to the recommended search content comprises the text result and the service slot.

15. A search apparatus, comprising:
a transceiver unit, configured to receive search content, wherein the search content comprises a word or a question entered by a user; and
a processing unit, configured to generate a search result based on the search content, wherein the search result comprises a text result and a service slot, the text result is used to display an answer corresponding to the search content, the service slot is used to link a service plug-in, the service plug-in corresponds to the search content, and the search result comprises service plug-ins from different information sources.

16. The apparatus according to claim 15, wherein the processing unit is specifically configured to:
generate a plurality of search words based on the search content, wherein the plurality of search words comprise at least one first search word, and the first search word indicates semantics that is not comprised in the search content; and
perform retrieval on the different information sources based on the plurality of search words, to obtain the service plug-in corresponding to the plurality of search words.

17. The apparatus according to claim 16, wherein the plurality of search words are related to the search content entered by the user and context information, and the context information comprises one or more of the following: historical search content of the user and a historical search result.

18. The apparatus according to any one of claims 15 to 17, wherein the apparatus further comprises:
a display unit, configured to provide a user display interface, wherein the user display interface is used to display the search content, the plurality of search words, and the search result.

19. The apparatus according to any one of claims 15 to 18, wherein the processing unit is further configured to:
verify accuracy of the search result based on an evaluation model, wherein the accuracy indicates a correlation between the service plug-in and the search result; and
when the accuracy is lower than a preset threshold, regenerate the search result.

20. The apparatus according to claim 18, wherein the display unit is further configured to:
display a mark of the service slot on the user display interface, wherein the mark is used to guide user equipment to invoke the service plug-in that corresponds to the service slot, and marks of service slots corresponding to different types of service plug-ins are different.

21. The apparatus according to any one of claims 15 to 20, wherein the processing unit is further configured to:
invoke, based on a user operation performed by the user on the service slot, an application programming interface corresponding to the service plug-in in the service slot, wherein the user operation comprises clicking or selecting.

22. The apparatus according to any one of claims 15 to 21, wherein the processing unit is further configured to:
recommend one or more pieces of next search content to the user based on the search result, wherein the next search content is search content that the user is likely to be interested in.

23. The apparatus according to any one of claims 15 to 22, wherein a service provided by the service plug-in comprises one or more of the following: a details page query service, a subscription service, and a weather service.

24. A search apparatus, wherein the apparatus comprises:
a display unit, configured to display a user display interface, wherein the user display interface is used to display a search input box;
a transceiver unit, configured to receive search content entered by a user through the search input box, wherein the search content comprises a word or a question entered by the user; and
a processing unit, configured to respond to a click to search operation performed by the user on the search content, wherein the display unit is further configured to display, on the user display interface, a search result corresponding to the search content, the search result comprises a text result and a service slot, the service slot is used to link a service plug-in, the service plug-in corresponds to the search content, and the search result comprises service plug-ins from different information sources.

25. The apparatus according to claim 24, wherein the display unit is further configured to:
display a mark of the service slot on the user display interface, wherein the mark is used to guide the user to perform a user operation on the service slot, and the user operation comprises clicking or selecting.

26. The apparatus according to claim 25, wherein the processing unit is further configured to:
respond to the user operation performed by the user on the service slot, wherein the display unit is further configured to display, on the user display interface, a service provided by the service plug-in corresponding to the service slot, the service provided by the service plug-in comprises one or more of the following: a details page query service, a subscription service, and a weather service.

27. The apparatus according to any one of claims 24 to 26, wherein the display unit is further configured to:
display recommended search content on the user display interface, wherein the recommended search content is one or more pieces of search content that the user is likely to be interested in and that are generated based on the search result.

28. The apparatus according to claim 27, wherein the processing unit is further configured to:
respond to a click operation performed by the user on the recommended search content, wherein the display unit is further configured to display, on the user display interface, a search result corresponding to the recommended search content, and the search result corresponding to the recommended search content comprises the text result and the service slot.

29. An electronic device, comprising a processor, wherein the processor is coupled to a memory, the processor is configured to store instructions, and when the instructions are executed by the processor, the electronic device is enabled to perform the method according to any one of claims 1 to 9, or the compute device is enabled to perform the method according to any one of claims 10 to 14.

30. A computer-readable storage medium, wherein the computer-readable storage medium stores instructions, and when the instructions are executed, a computer is enabled to perform the method according to any one of claims 1 to 9, or a computer is enabled to perform the method according to any one of claims 10 to 14.

31. A computer program product, wherein the computer program product comprises instructions, and when the instructions are executed, a computer is enabled to implement the method according to any one of claims 1 to 9, or a computer is enabled to implement the method according to any one of claims 10 to 14.
